# EUROPEAN PATENT APPLICATION

(11) **EP 4 588 854 A1**
(43) Date of publication of application: **23.07.2025**
(21) Application number: 24153192.0
(22) Date of filing: 22.01.2024
(51) Int. Cl.: B65G 1/04, B65G 1/06, B65G 1/10

(54) **LIFTING FRAME ASSEMBLY, STORAGE CELL AND RELATED STORAGE SYSTEMS AND METHODS**

(71) Applicant: AUTOSTORE TECHNOLOGY AS, 5578 Nedre Vats (NO)
(72) Inventor: Strømme, Erik, 5578 Nedre Vats (NO); Heggebø, Jørgen, 5578 Nedre Vats (NO)
(74) Representative: Kilburn & Strode LLP

(57) **Abstract**

There is provided a lifting frame assembly for a container lift device for a robotic container-handling vehicle for an automated storage and retrieval system, wherein the lifting frame assembly comprises: a lifting frame holder configured to be suspended from the container lift device by lifting bands, wherein the lifting frame holder has a rectangular horizontal outer periphery; a lifting frame comprising grippers for releasably gripping a storage container from above; and, one or more actuators configured, in use, to move a cradle for accommodating one or more storage containers situated in a cell of the storage and retrieval system between a storage position (in which the one or more containers are stored) and a transfer position (in which the one or more containers are accessible to the robotic container-handling vehicle. There are also provided a corresponding cell, a corresponding automated storage and retrieval system and related methods.

## Description

### TECHNICAL FIELD

This disclosure describes a lifting frame assembly for a container lift device for automated storage and retrieval systems. This disclosure also describes a storage cell for automated storage and retrieval systems.

More particularly, this disclosure describes a lifting frame assembly for a container lift device for automated storage and retrieval systems and a storage cell for automated storage and retrieval systems, wherein the storage and retrieval systems are of the type that comprise a framework structure comprising upright members and a two-dimensional rail system arranged across the top of the upright members, in which the rail system comprises a first set of parallel rails arranged to guide movement of container lift devices, as parts of respective robotic container-handling vehicles, in a first direction across the top of the framework structure, and a second set of parallel rails arranged perpendicular to the first set of rails to guide movement of the container-handling vehicles in a second direction which is perpendicular to the first direction, the first and second sets of parallel rails dividing the rail system into a plurality of access openings in the rail system for lifting and lowering a storage container between a position above the rail system and a position below the rail system.

This disclosure also describes related automated storage and retrieval systems and methods.

### BACKGROUND

Traditional storage solutions usually involve the arrangement of goods on rows of shelves within a warehouse. The shelf location for each item is recorded in an inventory, and goods are retrieved from the shelves by a stock picker. The shelves are restocked and the inventory updated as needed as goods enter and leave the warehouse.

Warehouse workers may be assisted by robotic pickers and by automated inventory management systems. Automated transit systems may also be implemented in traditional warehouse set ups to move goods from their inventory location to a picking and/or packing station.

An alternative to a traditional warehouse set up is an automated storage and retrieval system in which robots retrieve items from their logged location within the warehouse and deliver the items to a packing station or port. Such systems can reduce or eliminate the space needed to pass between rows of shelves to access stock, thereby removing the need for broad aisles within the warehouse. One example of such a system involves placing goods in bins or containers that are configured to be stacked, side by side, within a three-dimensional grid. A rail system is arranged above the grid, along which robotic container-handling vehicles configured to lift containers from the grid can travel. The container handling vehicles are configured to transport containers from the grid and to deliver them to ports or stations at periphery of the grid so that the goods from within the container can be picked and packed.

In such systems, those containers which contain more in-demand goods or parts tend to remain at or close to the top, whilst containers which contain less often used goods or parts tend to remain deeper within the stacks, and are thus less easily or quickly accessed when needed. However, in some applications, such as grocery, faster access to a larger number of containers may be necessary. There may also be a need for 'staging', wherein items are pre-picked and stored in the grid before use or delivery.

WO 2022/243215 A1 discloses automated storage and retrieval systems comprising a storage column with side openings and blockers, and a transfer column. The blockers are rotatable around a horizontal axis between a first position, in which the blockers act as guides for container lift devices, and a second position, in which the blockers allow transfer of respective containers, through the side openings, to the transfer column. The blockers may be connected to respective horizontally movable container supports, which may be moveable together with the containers, from the storage column to the transfer column, through the side openings. These arrangements avoid 'digging' for containers which require high-frequency access and/or for partly consolidated orders. Rather than being capable of being transferred only vertically, a number of containers may be quickly moved horizontally, from a storage position in the storage column to a transfer position in the transfer column, in which the containers can be swiftly 'picked' by a robotic container-handling vehicle for onwards order fulfilment. However, the blockers, container supports and/or containers are moved by an external mechanism, which usually comprises a motor or motorized actuator, provided in association with the framework structure. This makes the framework structure more complex and/or costly, which may be undesirable.

The present disclosure sets out to at least mitigate any drawbacks associated with the prior art. One or more aspects of the invention are laid out in the appended claims.

### BRIEF DESCRIPTION OF THE DRAWINGS

The disclosure will now be described in more detail in connection with a number of exemplary embodiments shown in the accompanying drawings, in which:
Fig. 1 shows a perspective view of a storage and retrieval system comprising a grid and a plurality of robotic container-handling vehicles configured to retrieve and/or rearrange goods stored within the grid;
Fig. 2 shows, schematically, a top view of the system of Fig. 1;
Fig. 3A shows a side view of a first robotic container-handling vehicle suitable for use in the system of Fig. 1;
Fig. 3B shows a side view of a second robotic container-handling vehicle suitable for use in the system of Fig. 1;
Fig. 3C is a perspective side view of the robot of Fig. 3B;
Fig. 4 shows a computing device for implementing the operations described herein;
Figs. 5A-C, 6A-B, 7, 8, 9, 10 and 11 show a collection sequence in which a container lift device according to an embodiment of the present invention (similar in principle to those shown in Figs. 3A-C) collects a bin from a cell according to another embodiment of the present invention; and in particular:

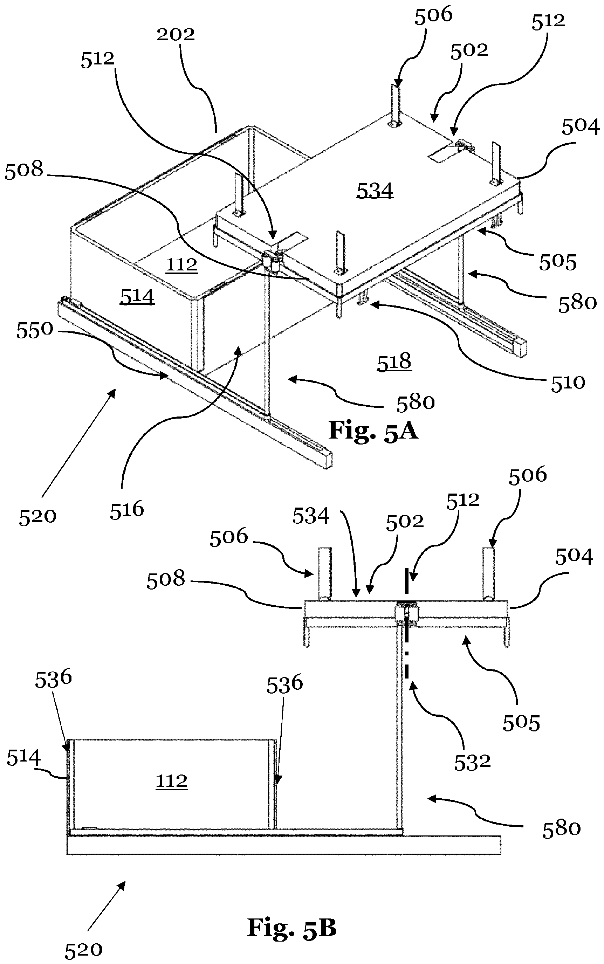

Figs. 5A-C show the container lift device and cell in a first, relative arrangement, with the container lift device lowered into an access opening of a framework structure of the storage and retrieval system, and ready to engage with the cell to move a bin from a storage position to a transfer position;

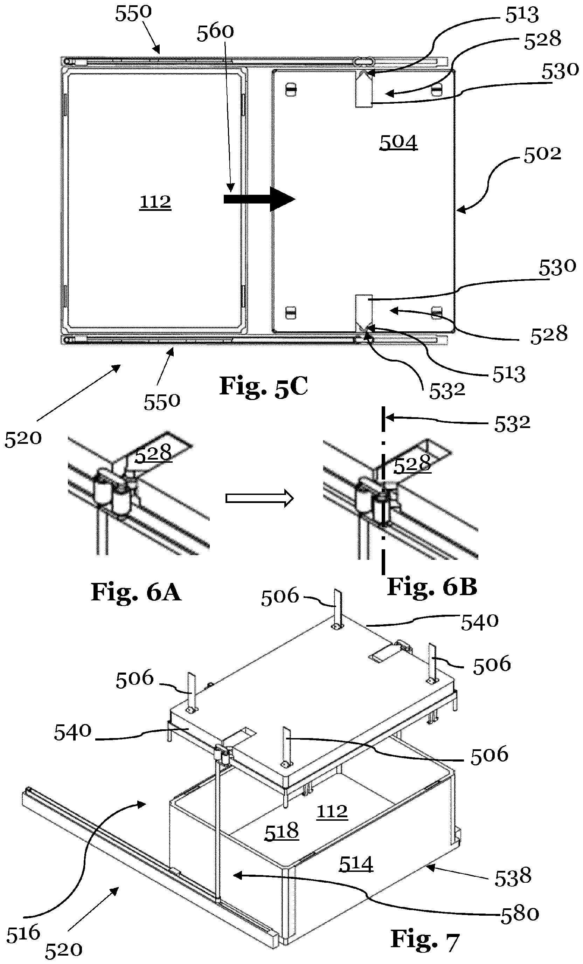

Figs. 6A-B show details of the engagement between the container lift device and the cell of Figs. 5A-C;
Fig. 7 shows the container lift device and the cell of Figs. 5A-C and 6A-B with the bin drawn out from the storage position, into the transfer position, ready for engagement with grippers of the container lift device;

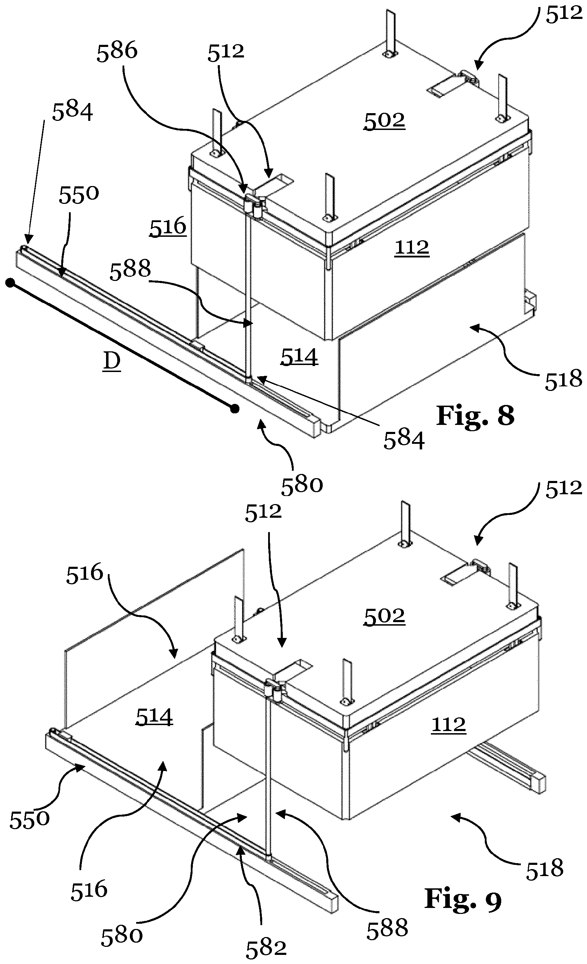

Fig. 8 shows the container lift device and the cell of Figs. 5A-C and 7 with the bin gripped by the grippers of the container lift device, and a shelf of the cell still in the transfer position;
Fig. 9 shows the container lift device and the cell of Figs. 5A-C, 7 and 8 with the bin still gripped by the grippers of the container lift device, and the shelf returned to the storage position;

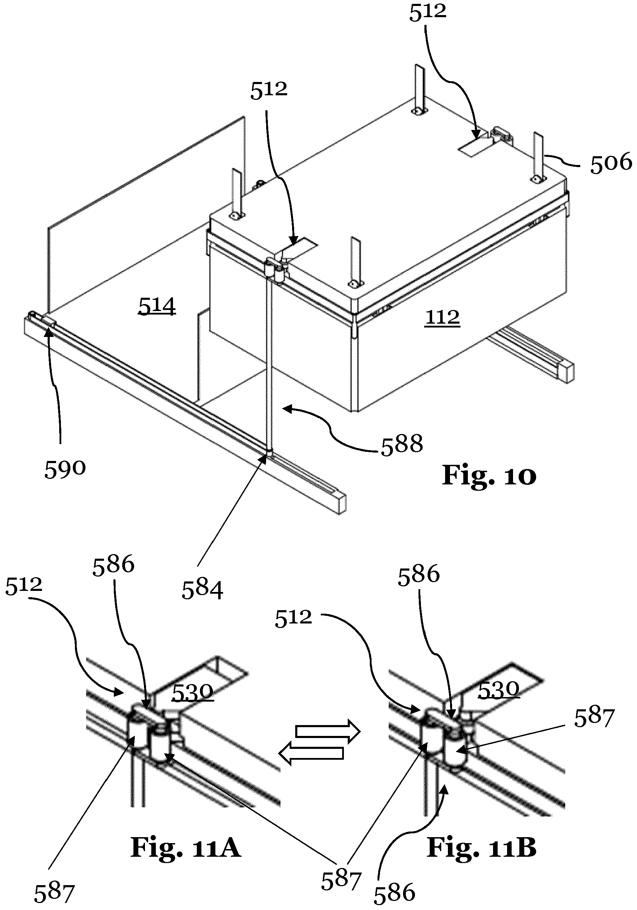

Fig. 10 shows the container lift device and the cell of Figs. 5A-C, 7, 8 and 9 with the bin still gripped by the grippers of the container lift device, the shelf returned to the storage position, but with the container lift device and the cell now disengaged (it should be noticed that this is also the starting configuration for a bin return operation);
Figs. 11A-B show details a) of the disengagement (left-to-right arrow) of the container lift device from the cell of Fig. 5A-C, 7, 8, 9 and 10 in a bin collection operation; and b) of the engagement (right-to-left arrow) between the container lift device and the cell of Figs 10, and 12-16.

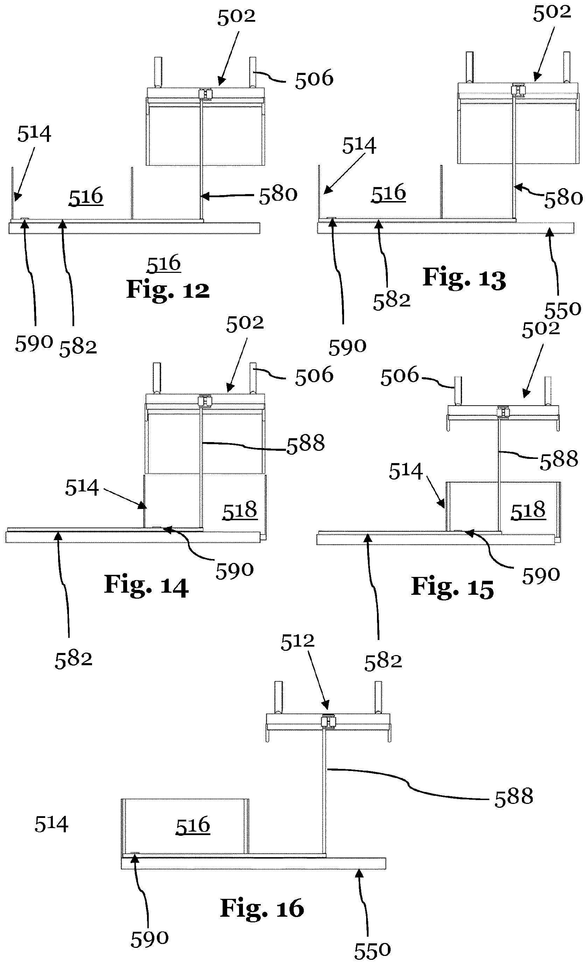

Figs. 12-16 show a return sequence which is a reverse sequence compared to that of Figs. 5A-C, 6A-B, 7, 8, 9, 10 and 11A-B; and in particular:
Fig. 12 shows the container lift device gripping and lowering a bin into the transfer position of the cell;
Fig. 13 shows the container lift device engaged with the cell for drawing out the shelf to the transfer position;
Fig. 14 shows the shelf in the transfer position, with the bin still gripped by the container lift device;
Fig. 15 shows the bin released by the container lift device, onto the shelf in the transfer position;
Fig. 16 shows the shelf returned to the storage position, with the bin thereon;

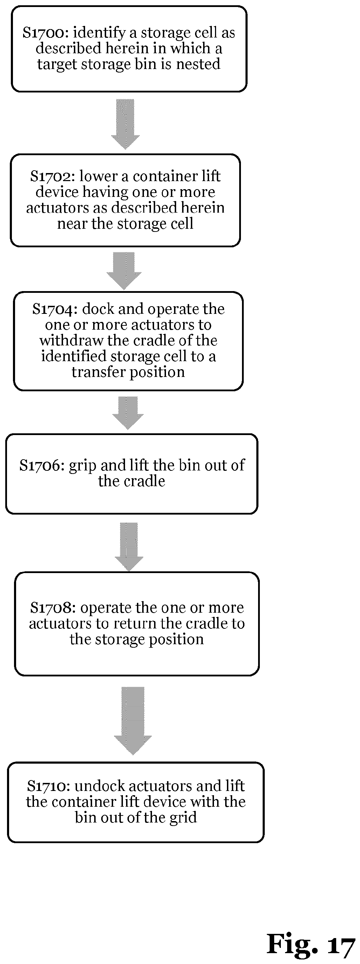

Fig. 17 is a flowchart representing a method of retrieving a bin from a storage and retrieval system as described herein; and,

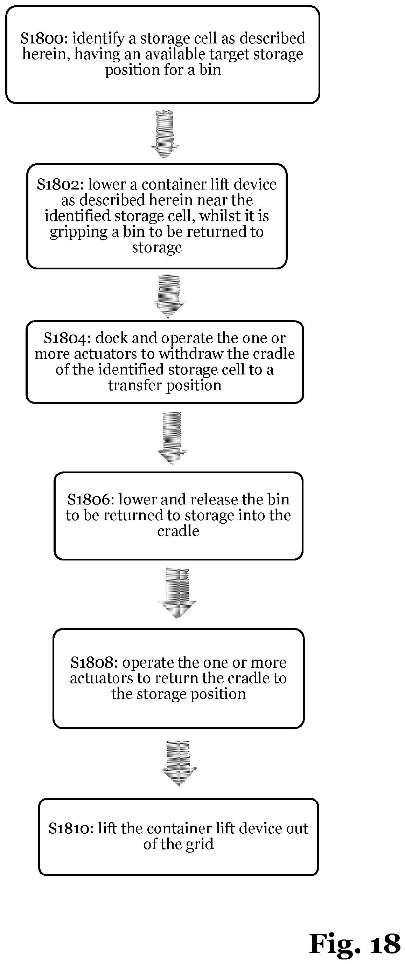

Fig. 18 is a flowchart representing a method of storing a bin in a storage and retrieval system as described herein.

### DETAILED DESCRIPTION

In overview, the disclosure relates to a lifting frame assembly for a container lift device of robotic container-handling vehicles, wherein the lifting frame assembly comprises a lifting frame holder, a lifting frame equipped with grippers for picking a container from the grid, and one or more actuators configured to, in use, move containers out from a storage column into a transfer column of the grid. Providing actuators configured to draw containers in and out from their storage positions, in readiness for picking from the robots, as part of the container lift devices operated by the robots themselves disposes of the requirement to provide such actuation on the framework structure. Providing such actuation on the robots is efficient, since the robots are already configured to handle power for different purposes, for example to move themselves on the rails or for picking containers through the access openings.

The disclosure also relates to a cell for such automated storage and retrieval systems, wherein the cell comprises: a pair of parallel horizontal frame members; and, a cradle (which may be provided in the form of a shelf, for example) for accommodating one or more storage containers, the shelf being arranged on the horizontal frame members of the cell, so that, in use, it can be moved (for example by sliding) from a first, storage position in which the one or more storage containers are stored in the cell, to a second, transfer position in which the one or more storage containers are accessible to the robots, which may therefore pick the one or more storage containers from the grid for onwards handling. The shelf is moved between the first and second position by one or more actuators as described herein, i.e. one or more actuators of a lifting frame assembly of a container lifting device for a robot as described herein.

The disclosure also relates to a storage and retrieval system including at least one robot including a container lift device as described herein, and a cell as described herein. In particular, it will be appreciated that the elements of a transmission system which designed to transfer actuation from the container lift device to the shelf may be provided, at least in principle, as part of the container lift device or as part of the cell, insofar as the container lift device and the cell are configured to cooperate with each other through said transmission elements to achieve the required function, which is moving the shelf between its first and second positions using the robots.

That said, it will be appreciated that it may be preferable to keep the robot as simple as possible whilst being configured to deliver the required actuation power, since the robot is also configured to perform many other functions. Preferably, therefore, most or all transmission elements are provided as part of the cell described herein, insofar as they are designed to receive actuation power from the robot, and more specifically from its container lift device.

### Automated storage and retrieval system overview

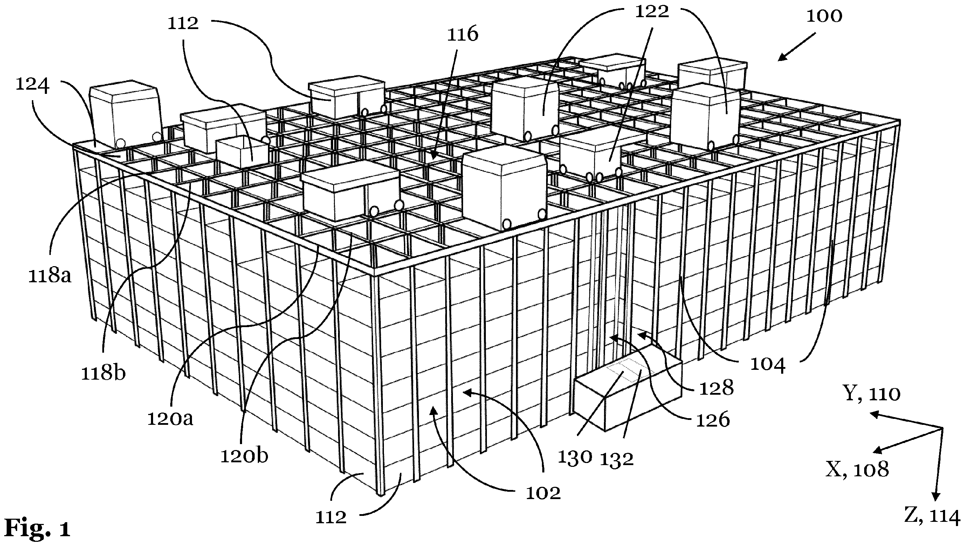

Referring to the embodiment shown in Fig. 1, a grid 100 comprises a frame formed by a plurality of generally rectilinear, adjacent vertical columns 102 formed between vertical frame members 104 and extending in the X and Y directions 108, 110. The grid elements may be fabricated of any appropriate material; for example, the frame members may be formed of extruded aluminium. Storage containers or bins 112 are stacked on top of each other, preferably in a self-supporting manner, in the Z direction 114 in the columns 102, forming a storage volume of storage cells for respective bins 112 extending in the X, Y and Z directions 108, 110, 114.

A rail system or network 116 is formed on top of the grid 100 and comprises pairs of vehicle rails or tracks 118a, 118b and 120a, 120b, respectively extending in the X and Y directions 108, 110. Robotic container-handling vehicles, or robots, 122, 202, 204, which can be of a range of size, shape and function, are provided and configured to run on the rails 118, 120 and to transport bins 112 in both the X and Y directions 108, 110. The robots 122, 202, 204 are additionally configured to lift and lower bins 112 from/into the columns 102 in the Z direction 114, the bins 112 optionally being guided by the vertical frame members 104. The robots 122, 202, 204 access the bins 112 via access openings 124 above the columns 102 and formed between the rails 118, 120.

Some columns 102 may be used for alternative purposes than bin storage. For example, port columns 126, 128 comprise port or access columns allowing transfer of a bin 112 in and/or out of the grid 100. Port columns 126, 128 provide a vertical channel for lifting of a bin 112 from, or lowering of a bin 112 to, a port or ports 130, 132. The ports 130, 132 are shown in Fig. 1 at the lowest level of the grid, however ports can be located at any vertical position along the column. The respective port columns 126, 128 can be assigned for removing ('drop-off) and/or returning or delivering ('pick-up') bins 112 from/to the grid 100. The ports 130, 132 are therefore configured to allow bins 112 to be removed and reintroduced (horizontally) into the associated port column. As such, a port 130, 132 can comprise a conveyor (not shown in Fig. 1) onto which a bin 112 may be lowered and transported horizontally out of the port column. The port columns 126, 128 include an opening or access point through which bins 112 can enter and leave the column.

Bins 112 can be transported along the top of the grid 100 to and/or from a port column 126, 128 by robots 122, 202, 204, and from a port 130, 132 to a location outside the grid 100, which may be an access station (not shown) for processing of the bin 112 or its contents, such as a picking station for adding content to, or removing content from, the bin 112. In alternative examples (not shown), the bin 112 may be transported to a port of another grid on the same or another level, or to an external facility. Transport of bins 112 to and from ports 130, 132 may be by any appropriate means (not shown) including conveyors, transport vehicles, lifts or robots.

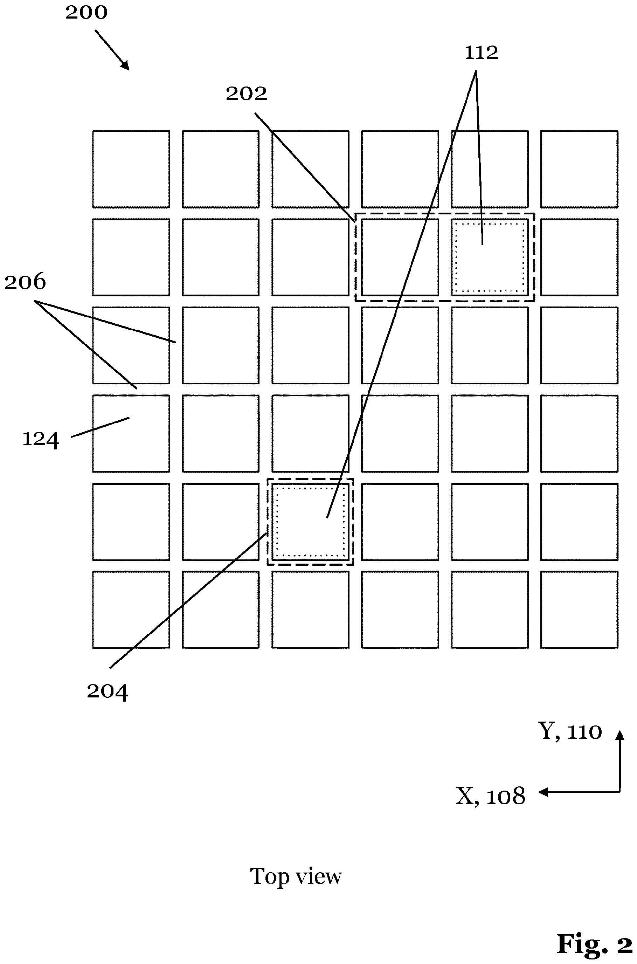

Referring to the embodiment shown in Fig. 2, the X-Y configuration 200 of the rail system 116 can be seen in more detail, together with robots 202, 204 of different types. The rail system includes rails 206 defining between them vertical column access openings 124 for access to bins 112. The rails 206 can be any appropriate type for permitting travel of the robots 202, 204 in the X and Y directions 108, 110 thereon, including (not shown) groove-type rails for receiving vehicle wheels, or protrusion-type rails for engaging wheel recesses. Each rail 206 may comprise a single track or multiple parallel tracks in each of the X and Y directions 108, 110.

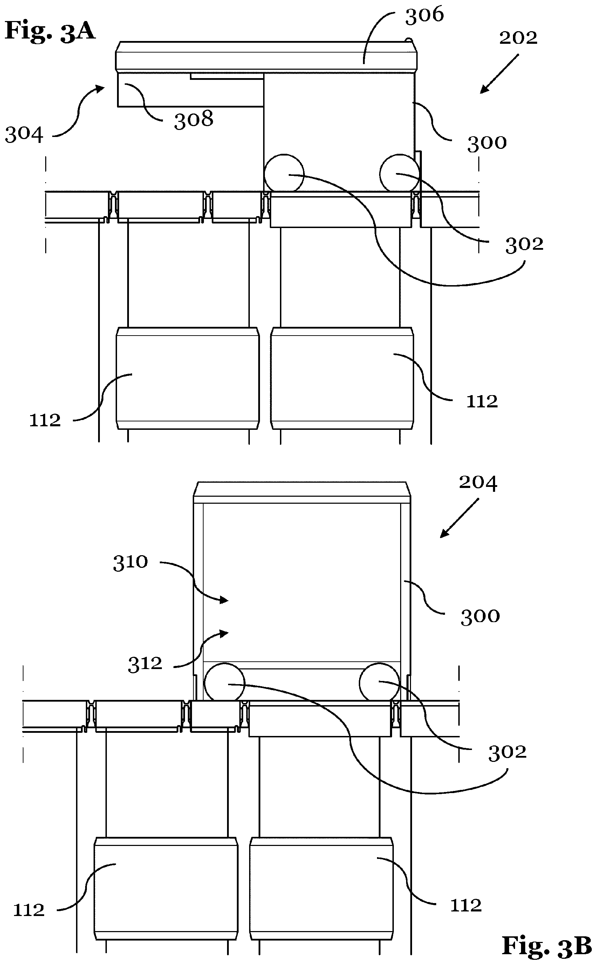

A first, 'cantilever' type of robot 202 is shown in more detail in Fig. 3A and includes a body 300, a set of wheels 302 and a lifting device 304. The body 300 contains operational equipment (not shown) for the robot 202 including drive, power and control systems. The wheels 302 permit movement of the robot 202 in one of the X and Y directions, an additional set of wheels (not visible in this view) permitting movement in the other of the X and Y directions, in both cases along the respective rails or tracks 206. One or both sets of wheels can be raised or lowered to permit selective engagement of the rails for movement in the desired direction. The lifting device 304 includes a cantilever element 306 extending in the X-Y plane from the top of the body 300, and a gripping device 308, which is raisable and lowerable from the cantilever element 306. The gripping device 308 is configured to grip or engage a bin 112; for example, by gripping a part of the bin 112, or by passively or actively engaging a suitably configured part of the bin 112.

A second, 'internal cavity' type of robot 204 is shown in more detail in Fig. 3B and includes, as an alternative to the cantilevered lifting system, an internal cavity 310 within the body 300 and in which the lifting device 312 including a gripping device (not shown) is located. In this case, the body 300 includes the robot's operational equipment and a storage space for one or more bins 112, for use, for example, while transporting the bin 112.

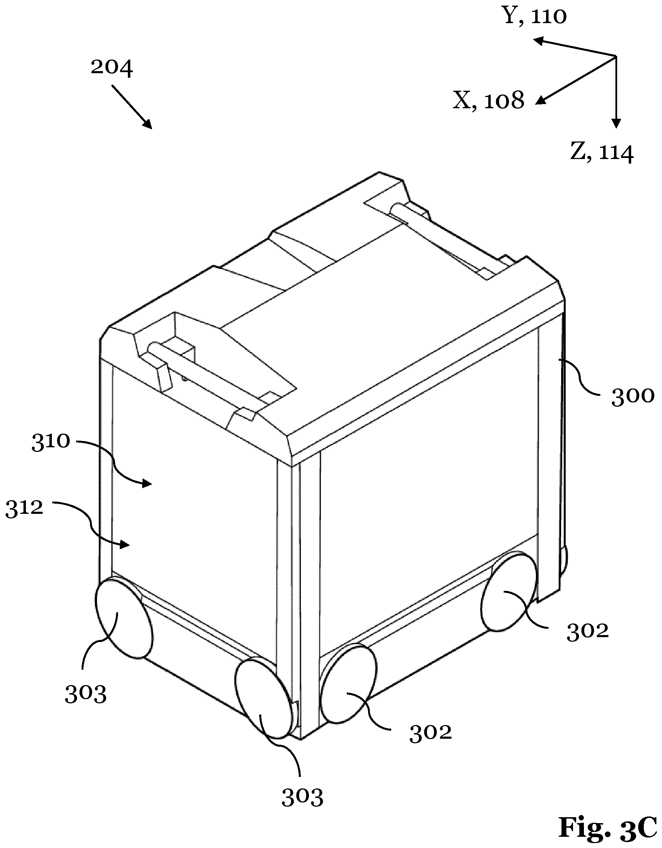

Fig. 3C shows a perspective side view of the robot of Fig. 3B in which the first set of wheels 302 from Fig. 3B are visible. The additional set of wheels referenced above but not shown in Fig. 3B are shown as wheels 303 in Fig. 3C. The additional set of wheels 303 is arranged perpendicular to the first set of wheels 302, to allow rolling of the robot 204 in the X and Y directions on the first and second set of wheels 302, 303 respectively. The first and second set of wheels 302, 303 shown in Fig. 3C may be configured to be independently lowered into engagement with the rails (and conversely raised out of engagement with the rails) to allow the robot 202 to move in the X and Y direction across the arrangement of rails shown in Fig. 2. Although the perspective view shown in Fig. 3C is of the robot 204 of Fig. 3B, it will be appreciated that a similar perpendicular wheel arrangement may be applied to the robot 202 of Fig. 3A.

### Control and monitoring system

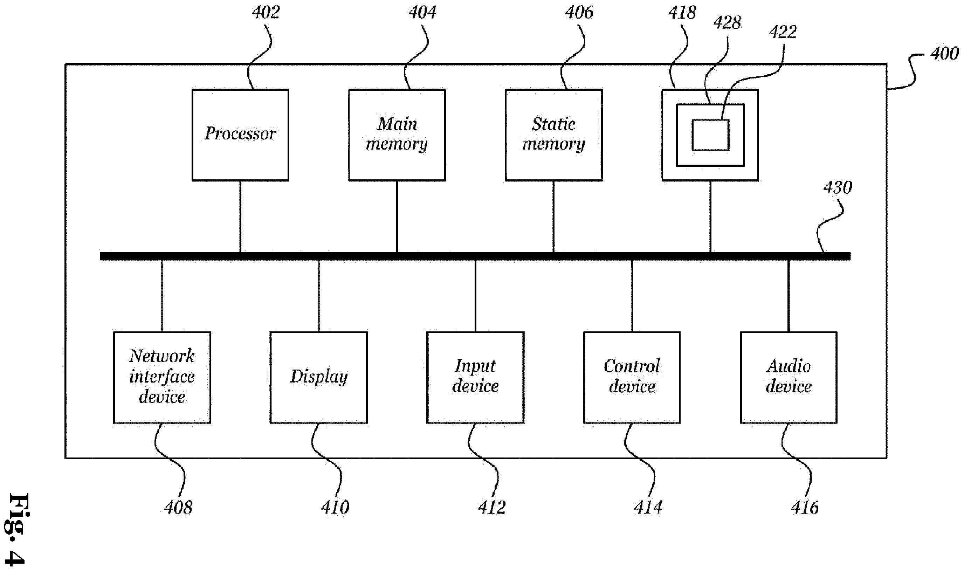

Control and monitoring of the automated storage and retrieval system, including monitoring and storing bin position and controlling bin delivery, retrieval and transport and robot routing and collision avoidance, is performed by a control system shown in Fig. 4 in communication with the robots and/or other controllable system components. Control can be performed locally or remotely and may be implemented by a processing system, for example in the form of a computing device. Accordingly, the methods described herein may form all or part of a computer-implemented method, or a system configured to perform the methods described herein.

With reference to Fig. 4, a processing system 400 suitable for carrying out the methods described herein will now be described. Fig. 4 shows a block diagram of one implementation of a processing system 400 in the form of a computing device within which a set of instructions for causing the computing device to perform any one or more of the methods described herein may be executed. In some implementations, the computing device may be connected (e.g., networked) to other machines in a Local Area Network (LAN), an intranet, an extranet, or the Internet. The computing device may operate in the capacity of a server or a client machine in a client-server network environment, or as a peer machine in a peer-to-peer (or distributed) network environment. The computing device may be a personal computer (PC), a tablet computer, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single computing device is illustrated, the term 'computing device' shall also be taken to include any collection of machines (e.g., computers) that individually or jointly execute a set (or multiple sets) of instructions to perform any one or more of the methods described herein.

The example processing system 400 includes a processor 402, a main memory 404 (e.g., read-only memory (ROM), flash memory, dynamic random-access memory (DRAM) such as synchronous DRAM (SDRAM) or Rambus DRAM (RDRAM), etc.), a static memory 406 (e.g., flash memory, static random-access memory (SRAM), etc.), and a secondary memory (e.g., a data storage device 418), which communicate with each other via a bus 430.

Processor 402 represents one or more general-purpose processors such as a microprocessor, central processing unit, or the like. More particularly, the processor 402 may be a complex instruction set computing (CISC) microprocessor, reduced instruction set computing (RISC) microprocessor, very long instruction word (VLIW) microprocessor, processor implementing other instruction sets, or processors implementing a combination of instruction sets. Processor 402 may also be one or more special-purpose processors such as an application specific integrated circuit (ASIC), a field programmable gate array (FPGA), a digital signal processor (DSP), network processor, or the like. Processor 402 is configured to execute the processing logic (instructions 422) for performing the operations and steps described herein.

The processing system 400 may further include a network interface device 408. The processing system 400 also may include any of a video display unit 410 (e.g., a liquid crystal display (LCD) or a cathode ray tube (CRT)), an alphanumeric input device 412 (e.g., a keyboard or touchscreen), a cursor control device 414 (e.g., a mouse or touchscreen), and an audio device 416 (e.g., a speaker).

It will be apparent that some features of the processing system 400 shown in Fig. 4 may be absent. For example, the processing system 400 may have no need for display device 410 (or any associated adapters). This may be the case, for example, for particular server-side computer apparatuses which are used only for their processing capabilities and do not need to display information to users. Similarly, user input device 412 may not be required. In its simplest form, processing system 400 comprises processor 402 and main memory 404.

The data storage device 418 may include one or more machine-readable storage media (or more specifically one or more non-transitory computer-readable storage media) 428 on which is stored one or more sets of instructions 422 embodying any one or more of the methods or functions described herein. The instructions 422 may also reside, completely or at least partially, within the main memory 404 and/or within the processor 402 during execution thereof by the processing system 400, the main memory 404 and the processor 402 also constituting computer-readable storage media 428.

The various methods described herein may be implemented by a computer program. The computer program may include computer code arranged to instruct a computer to perform the functions of one or more of the various methods described herein. The computer program and/or the code for performing such methods may be provided to an apparatus, such as a computer, on one or more computer-readable media (CRM) or, more generally, a computer program product. The computer-readable media maybe transitory or non-transitory. The one or more computer-readable media could be, for example, an electronic, magnetic, optical, electromagnetic, infrared, or semiconductor system, or a propagation medium for data transmission, for example for downloading the code over the Internet. Alternatively, the one or more computer-readable media could take the form of one or more physical computer-readable media such as semiconductor or solid-state memory, magnetic tape, a removable computer diskette, a random-access memory (RAM), a read-only memory (ROM), a rigid magnetic disc, or an optical disk, such as a CD-ROM, CD-R/W or DVD.

The computer program is executable by the processor 402 to perform functions of the systems and methods described herein.

In an implementation, the modules, components, and other features described herein can be implemented as discrete components or integrated in the functionality of hardware components such as ASICS, FPGAs, DSPs, or similar devices.

A 'hardware component' is a tangible (e.g., non-transitory) physical component (e.g., a set of one or more processors) capable of performing certain operations and may be configured or arranged in a certain physical manner. A hardware component may include dedicated circuitry or logic that is permanently configured to perform certain operations. A hardware component may be or include a special-purpose processor, such as a field programmable gate array (FPGA) or an ASIC. A hardware component may also include programmable logic or circuitry that is temporarily configured by software to perform certain operations.

Accordingly, the phrase 'hardware component' should be understood to encompass a tangible entity that may be physically constructed, permanently configured (e.g., hardwired), or temporarily configured (e.g., programmed) to operate in a certain manner or to perform certain operations described herein.

In addition, the modules and components can be implemented as firmware or functional circuitry within hardware devices. Further, the modules and components can be implemented in any combination of hardware devices and software components, or only in software (e.g., code stored or otherwise embodied in a machine-readable medium or in a transmission medium).

### Operation of the automated storage and retrieval system

In operation, each bin 112 is given a unique identifier, which maybe marked on the bin 112 using a computer-readable identifier (e.g., a barcode, quickresponse code or radio-frequency identification tag) to ease identification of the bin 112. A database of the processing system 400 stores, in association with the unique identifier, the position and, optionally, content of each bin 112. When a bin 112 is moved (e.g., when it is retrieved from the grid 100), the database is updated to record its change in position.

When it is desired to retrieve a bin 112 from the grid 100, under control of the processing system 400, a robot 202, 204 is routed via the rail system 116 to the vertical column 102 including the storage cell where, according to the database, the bin 112 is positioned, and the lifting device 304, 312 is positioned (according to robot type) over the corresponding access opening 124, either adjacent or below the robot 202, 204. The robot 202, 204 lowers the gripping device 308 which engages, grips and lifts the bin 112 to the robot 202, 204. The robot 202, 204 then transports the bin 112, for example, to the drop-off port column 126, 128 for delivery to the port 130, 132 and subsequent processing external to the grid 100. In the event that the target or designated bin 112 is below other bins in the stack then the robot 202, 204 or multiple robots, which may be dedicated to the task, are controlled in a 'digging' operation to sequentially lift and reposition, temporarily or permanently, bins above the target bin 112 in order for it to be retrieved. It will be appreciated that other operations in relation to the bin 112 can be carried out in a similar manner. For example, a bin 112 can be delivered for storage in the grid 100 at the port 130, 132 of the pick-up port column 126, 128, gripped and lifted by a robot 202, 204 and delivered to the desired storage cell, bins above the desired position being repositioned if necessary as discussed above.

### Lifting frame assemblies with actuators for lateral container movement within a storage cell

Fig. 5A shows a lifting frame assembly 502 for container lift devices 304, 312 as described herein. In many respects, the lifting frame assembly 502 described herein is akin the gripping device 308 mentioned herein above. However, as it will become apparent, the lifting frame assembly 502 described herein has been modified over the gripping device 308, i.e., it has been further adapted, to carry out specific functions in connection with storage cells 520 as described hereinbelow. The lifting frame assembly 502 is formed by a lifting frame holder 504, which may configured to be suspended from a cantilever element 306 or other lifting device 304, 312 (not shown in this figure) by lifting bands 506. As it can be seen in Fig. 5A, the lifting frame holder 504 has a rectangular horizontal outer periphery 508, even though other shapes and conformation would be at least in principle be possible.

The lifting frame holder 504 supports a lifting frame 505 which is equipped with grippers 510 configured to releasably grip storage containers 112 from above, as previously described. The inventors have further equipped the lifting frame assemblies 502 described herein with, in this specific example, a pair of actuators 512 configured to move a cradle or shelf 514 for accommodating one or more storage containers 112 thereon, laterally, in and out of a storage position 516 defined within a storage cell 520 included in the automated storage and retrieval system 100 described herein. In principle, as it will be clearer form the passages of the description below, a single actuator 512 could be used, though there is no limit on the use of one, two or even more actuators 512, since multiple actuators 512 can been provided within the same lifting frame assembly 502.

In this way, the storage containers 112 associated with the cradle 514 (for the sake of description, we will from now on just refer to a single container or bin 112 accommodated on the cradle or shelf 514), can be moved between said storage position 516 and a transfer position 518, as will be described further below. In Fig. 5A, the process of collecting the storage container 112 using a lifting frame assembly 502 associated with a robot 122, 202, 204 (not shown in Fig. 5A) has just been initiated, with the lifting frame assembly 502 having been just lowered by the robot 122, 202, 204 into an access opening 124 from the above rail system 116. Fig. 5A shows in perspective the cradle 514 and respective container 112 in the storage position 516, with the lifting frame assembly 502 situated just above the transfer position 518 of the storage cell 520. Fig. 5B is equivalent to Fig. 5A, but shows a side elevation of the arrangement of Fig. 5A.

Various constructions of the lifting frame assembly 502 are in principle possible. For example, the lifting frame 505 could be configured to be moveable with respect to the lifting frame holder 504. Alternatively, the lifting frame 505 may be fixed with respect to the lifting frame holder504, as is the case of the presently described implementation. This means that the bands 506, which in this implementation carry power as well as signal to the lifting frame assembly 502, and therefore to the actuators 512, are configured to lift and lower the lifting frame holder 504 and the lifting frame 505, effectively, as a single unit.

As shown in Fig. 5C, each actuator 512 comprises at least one roller 513. However, at least in principle, one or more alternatives to the rollers 513 could have been used, such as arrangements comprising toothed wheels, or other gear arrangements, or other arrangements for transmitting rotary movement, such as arrangements comprising, for example, a pulley system. These alternatives are not described further herein, for the sake of conciseness. The rollers 513 are each sandwiched between upper and lower plates 530, which together constitute each actuator's arm 528. The actuators' arms 528 are linearly moveable to deploy or retract, as necessary, the rollers 513. When the actuator arms 528 are extended, the rollers 513 slightly project from the periphery 508 of the lifting frame holder 504. This of course favours engagement of the actuators 512 with the storage cell 520, as will be further described below, so that the cradle 514 maybe moved as required. When the rollers 513 are retracted, then the actuators 512 are no longer engaged to the storage cell 520, and can be neatly stowed away within the outer horizontal periphery 508 of the lifting frame holder 504. Storing away the actuators 512 helps, as it will be appreciated, a smooth operation of lifting/lowering the assembly 502 to/from the top of the grid 100.

As shown by Figs. 5A-C and by the constructive details shown in Figs. 6A-B, each roller 513 is configured to rotate around a vertically oriented axis 532. In the described arrangement, the vertically oriented axis 532 is substantially perpendicular to a notional horizontal plane 534 defined by the lifting frame holder 504 and/or its periphery 508. As best shown by Fig. 5C, the lifting frame assembly 502 may comprise only a pair of such actuators 512, which may each comprise a single roller 513 for simplicity of design, and minimisation of manufacturing costs. When this is the case, for the sake of maximising stability, it may be important to dispose the actuators 512 on opposed sides 540 of said periphery 508, such as on the short sides 540 of the rectangular outer periphery 508 of the lifting frame holder 504.

With reference now to Figs. 6A-B, the actuators' arms 528 are now extended laterally (as confirmed by the small gap seen in Fig. 6B) so that the rollers 513 of the actuators 512 come to engage the storage cell 520, and more specifically a transmission arrangement disposed on said storage cell, as will be appreciated form the passages below. The purpose of such engagement is to slide the cradle 514, the cradle 514 being slidingly arranged on horizontal frame members 550 of the storage cell 520 of the automated storage and retrieval system 100, so that the cradle 514 is moved from a first configuration or position 516 wherein the associated storage container 112 is stored in the storage cell 520, to a second configuration 518 wherein the storage container 112 is accessible to a container-handling vehicle or, simply, a robot 122, 202, 204 of said automated storage and retrieval system 100 (or, simply, grid 100). The features of the storage cell 520 which enable the actuators 512 to fulfil their function are further described below, under the next header titled *"Storage cell for lateral container movement within an automated storage and retrieval system".*

### Storage cell for lateral container movement within an automated storage and retrieval system

Continuing on with reference to Figs. 5A-C and 6A-B, the inventors have devised a storage cell 520 for the grid 100 that includes a pair of parallel horizontal frame members 550, and a cradle or shelf 514 for supporting, in this example, a single storage container 112. The cradle or shelf 514 is arranged on said horizontal frame members 550 such that it can be moved between a storage position 516 in which the container 112 is stored within the storage cell 520 and a transfer position 518 in which the container 112 is accessible from said storage cell 520 to one of the robots 122, 202, 204. The storage cell 520 comprises a number of features which form an overall arrangement which, as we describe further below, is configured so that the cradle or shelf 514 can be moved between said storage and transfer positions 516, 518 by the actuators 512, 513 specifically provided for this very purpose on the lifting frame assembly 502 associated with the corresponding robot 122, 202, 204. In other words, the storage cell 520 has been specifically modified not only to allow lateral movement of the container 112 in question 112 from the respective container stack or column 102, but to achieve this in cooperation with one or more actuators 512 provided, essentially, as part of the robot 122, 202, 204, i.e., on the robot's side, and not on the framework structure's side. From this point if view, it is useful to observe that the framework structure remains completely passive, with positive actuation provided, essentially, by the robot 122, 202, 204.

As can be seen by comparing the configurations of Figs. 5A-C with that of Fig. 7, the cradle or shelf 514 is slidingly arranged on the pair of parallel horizontal frame members 550 described above. In different implementations, the cradle 514 maybe simply supported on said frame members 550, or can be guided to move laterally thereon using one or more guides (not shown). In order to adequately hold the container 112 in the cradle or shelf 514, the cradle 514 has a pair of parallel, vertically extending walls 536 which extend from a base 538 of the cradle (see Fig. 7), which is in contact with the frame members 550. These vertical walls 536 are disposed generally perpendicularly with respect to a direction of movement 560 of the cradle 514, as shown in Fig. 5C. However, other configurations may be possible, though it is generally preferred if the walls 536 at least partially conform to the shape of the container 112 which they are designed to accommodate, at least partially, which means that, for example, the walls 536 do not have to extend vertically to the exact height of the container 112, though in the described example, they do. Likewise, the base 538 of the cradle could take many shapes or forms, and in particular it may be provided as a solid sheet of material, or it can have apertures or slots to make the cradle 514 lighter. The described cradle 514, however, is generally in the form of a "U" shape, in the direction of lateral movement 560, though other shapes would be possible, such as an "L" shape or reversed "L" shape, or other shapes. The upper side of the cradle 514 is required to remain open to allow passage of the container/bin 112, when the container/bin 112 is picked from the cradle 514, or returned to the cradle 514 after fulfilment of an operation by the computer system 400.

Describing now the features provided on the storage cell 520, so that the cradle 514 may move as required, as also shown in Figs. 5A-C, the cell 520 is equipped with two pulley systems 580, one on either side of the cradle 514. It will be appreciated that it may not be necessary to provide two symmetrically disposed pulley systems 580, one associated to each of the horizontal frame members 550. For the intended purpose, it may be sufficient to provide a single pulley system 580, for example disposed on a chosen one of the horizontal frame members 550.

Each pulley system 580 comprises at least one belt, cable or chain member 582, and at least two wheel elements 584 disposed at a distance D from each other (for which, see Fig. 8) along at least one of said horizontal frame members 550. Each pulley system 580 is configured to be operated by the actuators 512, in the following manner in connection with an operation of collection of a container/bin 112 initially stored in the storage position 516 in the storage cell 520:
a. the actuators 512 are first laterally deployed to engage a set of rolling terminations 586 disposed at the distal ends of respective shafts or spindles 588 which rotate in unison with respective first wheel elements 584 disposed on the horizontal frame members 550 (said rolling terminations 586 may be, once again, but not limited to, in the form of simple rollers 587, which we refer to as the rollers 587 of the storage cell 520 to distinguish the same from the rollers 513 that pertain to the actuators 512, provided on the lifting frame assemblies 502); more specifically, it is noted that one of said rollers 587 is active, i.e. positively transmits actuation to the pulley system 580, wherein the other roller is an idling roller, provided for support reasons only, which does not contribute to the transmission of the actuation;
b. the actuators are actuated using power from the robots 122, 202, 204 and rotation is transmitted from the actuators' rollers 513 to the rolling terminations 586 of the storage cell 520, and more particularly to the corresponding storage cell rollers 587, and from there to the shafts or spindles 588;
c. the shafts or spindles 588 in turn transmit rotary motion to their respective wheel elements 584, which activate the pulley systems 580 via the belt, chain or cable members 582; and,
d. in the described implementation, a slider or block 590 (see Fig. 10) is fixed on a side to a respective belt, chain or cable member 582, and on the other side to the cradle 514, so that movement of the belt, chain or cable member 582 around the pulley system's first wheel element 584 and second wheel element 584 disposed at a distance D from the first wheel element 584 results into sliding of the cradle from the storage position 516 to the transfer position 518, when rotation happens in a first direction, and in reverse, from the transfer position 518 back to the storage position 516 when the rotation is in the second, opposite direction.

Movement of the cradle 514 between the storage position 516 and the transfer position 518 is fully reversible, depending on the direction of rotation of the rollers 513 of the actuators 512. The horizontal frame members 550 are supported by the vertical frame members 104 of the grid 100. In the described implementation, the second wheel element 584 of each pulley system 580 appears disposed towards an end of a respective horizontal frame members, but the exact disposition will be a matter of design for any specific application requirements, and not a matter of operational principle. Other parameters such as the distance D, the length and/or height of the shaft or spindle 588, its thickness, material and manufacture, etc.. will also be matters of specific design rather than principle. The underlying principles of the present disclosure remain:
A) the provision of actuators 512 for laterally shifting the position of a cradle holding one or more storage containers 112, on the lifting frame assembly 502 of the robot 112, 202, 204, said actuators 512 being powered by the robot 112, 202, 204, rather than by any external drive mechanisms provided on the grid 100; and,
B) the provision of one or more storage cells 520 specifically designed for lateral movement of one or more containers 112 stored therein via said one or more actuators 512, such that the containers so moved may be accessed by the robot 112, 202, 204 without going through any 'digging' operations.

It will be appreciated that for the implementation of the teachings disclosed herein, it not necessary to have a `one to one' relationship between cells 520 and containers 112; this means that one storage cell 520 may comprise multiple containers 112, and any one container 112 may be stored and/or transferred from any number of storage cells 520 as described herein. Multiple containers 112 may be accommodated on a single cradle 514, and/or multiple storage cells 520 can be stacked one on another, essentially forming a stack or column 102 for containers 102 akin to a traditional container column 102, as described above.

Returning now briefly to the key features of the pulley systems 580, each shaft or spindle 588 may be rigidly mounted on, or be integrally formed with, the corresponding wheel element 584. Other manner of transmission of rotation are, however, not to be excluded. The shaft or spindle 588 extends generally vertically from the corresponding wheel element 584 and horizontal frame member 550. The shaft or spindle 588 comprises at least one first roller 587 disposed at a distal end thereof, and it is at least this first roller 587 that is configured to be actively rotated by the respective actuator 512. When, as in the shown implementation, a second roller 587 is also disposed at said distal end of the shaft or spindle 588, this is ideally disposed parallel and in close proximity to said first roller 587, so that the first and second rollers 587 are configured to receive therebetween the actuator's roller 513, so that the rollers 587 on the side of the storage cell 520 are arranged to rotate in the same direction in response to the actuation. This arrangement allows the actuator's roller312 to be received and, more specifically, 'funnelled-in' between the rotating rollers 587 on the storage cell side. This arrangement is also particularly favourable in connection with the possible provision in the actuator of one or more sensors (not shown) for sensing the 'docking' of the one or more actuators 512, 513 to the rollers 587 on the cell side, and/or transmission of movement from the actuators 512, 513 to the cradle 514. Such sensors could ideally be located in any parts of the robot directly exchanging forces with the cell, for example, on a bearing associated with the roller 513 of the actuator 512. Such sensors may comprise, just as an example, one or more of a load cell, strain gauge or other sensing probe, as known in the arts.

### Operation of the one or more actuators and storage cells described herein

Having described in some detail the features of the actuators 512, 513 and storage cells 520 described herein, reference will now be made to Figs. 5A-C, 6A-B, 7, 8, 9, 10, 11A-B and 17 to describe in some more detail a bin collection or retrieval operation in which a robot 122, 202, 204 according to an embodiment of the present invention (similar in principle to those shown in Figs. 3A-C) collects a bin 112 from a cell 520 according to another embodiment of the present invention.

Starting with Figs. 5A-C, as previously mentioned, after the identification of a storage cell 520 in which a target storage bin 112 has been identified (Fig. 17, step S1700), the lifting frame assembly 502 of one of the robots 122, 202, 204 is lowered just above the transfer position 518 of the storage cell 520 (Fig. 17, step S1702). At this point, the container 112 is stored in the cell 520 in its storage position 516. Processing system 400 instigates docking (Fig. 17, step S1704) of the one or more actuators 512, 513 on the corresponding rollers 587 provided on the pulley system 580 with which the storage cell 520 is equipped (see Figs. 6A-B). This is achieved by extending actuators' arms 528.

Processing system 400 commands actuation of the rollers 513 in a predetermined rotation direction (see also S1704 in Fig. 17), to withdraw an identified storage bin 112 from its storage position 516 in the storage cell 520 to its transfer position 518, directly to a side of the storage position (as seen, for example, Fig. 7). At this point, processing system 400 commands lowering of the lifting frame 505, or of the whole lifting frame assembly 502, as the case may be, so that the grippers 510 may grip the bin 112. Once the bin 112 has been gripped by the grippers 510, the processing system 400 requires the robot 112, 202, 204 to lift its lifting fame assembly 502, with the bin 112 attached to it, as shown in Fig. 8, and according to step S1706 of Fig. 17.

As shown in Fig. 9, the actuators are actuated in the opposite direction of rotation to send the cradle 514 back to the storage position 516, so that any other, lower bins 112 may also be accessed by any of the robots 112, 202, 204 in any subsequent bin collection (or picking) operations (Fig. 17, step S1708).

At this point, the actuators 512, 513 may detach (i.e., undock) from the cell pair of rollers 587, as shown in Figs. 10 and 11A-B, in greater detail. This is achieved by retracting the actuators 512, 513 within the outer periphery 508 of the lifting frame holder 502, as commanded to the actuators' arms 528 by the processing system 400. The identified bin 112 may at this point safely and swiftly be transported from the transfer position 518 to the top of the rail system 116 for onwards handling (step S1710 in Fig.17).

Having described in some detail the features of a bin collection or retrieval operation, reference will now be made to Figs. 10, 11A-B, 12-16 and 18 to describe in some more detail a bin storage operation in which a robot 122, 202, 204 as described herein (similar in principle to those shown in Figs. 3A-C) returns a previously collected bin 112 back into a storage cell 520 as also described herein.

Starting now from Fig 10, as previously mentioned, Fig. 10 may also double up to represent the initial stage of a bin return sequence. This is because Fig. 10 maybe interpreted as showing a bin 112 to be returned to its storage position 516 in one of the cells 520 described herein, with the bin 112 still connected to the grippers 510 of the robot 122, 202, 204. At this moment, a specific storage cell 520 has ben identified for returning the bin 112 to storage (Fig. 18, step S1800).

At step S1802 of Fig. 18, the specially-adapted container lift device 502 is lowered near the identified storage cell 520, with the bin 112 still gripped. Figs. 11A-B (right-to-left arrow) show the deployment of one of the actuators' arms 528 until the respective roller 513 projects of some measure from the border of the periphery 508 of the lifting frame assembly 502, to dock against the pair of rollers 587 provided as part of the pulley system 580 of the storage cell 520 described herein. It will be noticed that Fig. 12 corresponds to Fig. 10, though this is a side elevation rather than a perspective. Fig. 13 corresponds to Figs. 10 and 12, but here the actuators 512, 513 have already docked against the rollers 587 provided on the pulley system 580 with which the storage cell 520 is equipped.

In Fig. 14, the cradle 514 is withdrawn (this time empty) from its storage position 516 in the storage cell 520. The actuators 512, 513 moves the empty cradle 514 until the empty cradle reaches its transfer position 518 in the storage cell 520, directly below the bin 112 which is to be returned to storage (see step S1804 in Fig. 18).

At this point, the bin 112 is lowered by the robot, which may optionally be achieved by lowering the whole lift frame assembly 502, or at least its lifting frame 505, if the lifting frame 505 may be lowered independently of the lift frame assembly 502. Accordingly, the bin 112 is accommodated into the cradle or shelf 514 in the transfer position 518, by releasing at the correct time moment the grippers 510 (see Fig. 15, and also step S1806 of Fig. 18).

The last operation is returning the cradle 514, now loaded with the return bin 112, to the storage position 516, and this is a process illustrated by Fig.16. This is achieved by actuating the actuators 512, 513 in the opposite direction compared to when the cradle 514 had been withdrawn from the storage position 514, in readiness for accepting the bin 112 to be returned. In Fig. 16 the process has been completed with the bin 112 safely and quickly stored back intis storage position 516 in the storage cell 520 (reference is made to step S1808 of Fig. 18). At this point, the empty, specialised container lift device 502 may be lifted out of the grid, as represented by step S1810 of Fig. 18.

Figure 17 is a flow-chart summarising the process described in paragraphs [0076] to [0080].

Figure 18 is a flow-chart summarising the process described in paragraphs [0081] to [0086].

Whilst the present invention has been described in connection with a lift frame assembly 502 which has a pair of actuators 512 in the form of rollers 513, and with a storage cell 520 equipped with `complete' pulley systems 580 as described herein, it will be appreciated that even though the described embodiments may be considered to be preferred, they are not the only manner of implementing the invention. For example, one could conceive, at least in principle, providing the pair of rollers 587 and shaft or spindle 588 as part of the robot 122, 202, 204, i.e., more specifically, as part of the robot's lifting frame assembly 502. Hypothetically, the whole pulley systems 580 could be provided on the robot's side. Equally hypothetically, the rollers 513 could have been provided as part of the pulley systems 580, on the storage cell side, by using an alternative but still appropriate actuation mechanism on the robot side. Accordingly, we consider within the scope of the present disclosure the provision of an automated storage and retrieval system comprising a lifting frame assembly, a storage cell and a transmission mechanism operatively connected to the lifting frame assembly at an end thereof, and to a movable and/or slidable cradle as described herein at the other end thereof, and configured to perform the functions described herein. The transmission mechanism may be provided completely on the robot side; alternatively, it may be provided completely on the storage cell side; alternatively, it may be provided partially on the robot side and partially on the storage cell side, as described herein, or according to different distributions of the same or equivalent components across the robot and the cell sides, respectively.

With the cradle or shelf 514 in the storage configuration, the cell 520, and in particular at least a vertically extending wall 536 of the cradle or shelf 514 facing the transfer position 518 of the storage cell 520, and/or adjacent portions of the vertical frame members 104 provided in correspondence of the storage cell 520, may be adapted to provide guidance for the lifting frame assemblies 502 or lifting frames 505 during their vertical lifting and/or lowering.

It is to be understood that the above description is intended to be illustrative, and not restrictive. Many other implementations will be apparent to those of skill in the art upon reading and understanding the above description. Although the present disclosure has been described with reference to specific example implementations, it will be recognized that the disclosure is not limited to the implementations described, but can be practiced with modification and alteration within the spirit and scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

## Claims

**1.** A lifting frame assembly for a container lift device of a robotic container-handling vehicle for an automated storage and retrieval system, wherein the lifting frame assembly comprises:
a lifting frame holder configured to be suspended from the container lift device by lifting bands;
a lifting frame comprising grippers for releasably gripping a storage container from above; and,
one or more actuators configured, in use, to move a cradle for accommodating one or more storage containers between a storage position in which the one or more containers are stored in a cell of the automated storage and retrieval system and a transfer position in which the one or more containers are accessible from said cell to the robotic container-handling vehicle.

**2.** The lifting frame assembly of claim 1, wherein the lifting frame is configured to be moveable with respect to the lifting frame holder for releasably gripping the storage container from above, or wherein the lifting frame is fixed with respect to the lifting frame holder.

**3.** The lifting frame assembly of claim 1 or 2, wherein the lifting frame holder has a rectangular horizontal outer periphery.

**4.** The lifting frame assembly of claim 1, 2 or 3, wherein the one or more actuators each comprise at least one roller;
optionally, wherein each roller is configured to rotate around a vertically oriented axis;
optionally, wherein said vertically oriented axis is substantially perpendicular to a notional horizontal plane defined by the lifting frame assembly, such as by the lifting frame holder outer periphery.

**5.** The lifting frame assembly of any preceding claim, wherein the one or more actuators are each deployable from a first configuration in which the one or more actuators are at least partially accommodated within the lifting frame holder, for example, within its horizontal outer periphery, to a second configuration in which the one or more actuators at least partially project from the lifting frame holder/periphery.

**6.** The lifting frame assembly of any preceding claim , wherein the one or more actuators each comprise at least one actuation arm;
optionally, wherein each actuation arm comprises a pair of upper and lower plates configured to support said at least one roller.

**9.** The lifting frame assembly of any preceding claims, comprising only a pair of said actuators;
optionally, wherein said actuators are disposed on opposed sides of said periphery;
preferably, wherein said sides are the short sides of said rectangular horizontal outer periphery.

**10.** The lifting frame assembly of any preceding claim, wherein the one or more actuators are configured, in use, to slidingly move the cradle, wherein the cradle is slidingly arranged on horizontal frame members of a storage cell of said automated storage and retrieval system.

**11.** The lifting frame assembly of any preceding claim, wherein said one or more actuators are configured to exchange power and/or signal through at least one of said lifting bands.

**12.** The lifting frame assembly of any preceding claim, comprising one or more sensors arranged to sense whether the one or more actuators are engaged to said cradle and/or whether the cradle is moving in response to actuation.

**13.** A container lift device for a robotic container-handling vehicle for an automated storage and retrieval system or a robotic container-handling vehicle for an automated storage and retrieval system, comprising the lifting frame assembly of any preceding claim.

**14.** A storage cell for an automated storage and retrieval system comprising a framework structure comprising upright members and a two-dimensional rail system arranged across the top of the upright members, the rail system comprising a first set of parallel rails arranged to guide movement of container-handling vehicles in a first direction across the top of the framework structure, and a second set of parallel rails arranged perpendicular to the first set of rails to guide movement of the container-handling vehicles in a second direction which is perpendicular to the first direction, the first and second sets of parallel rails dividing the rail system into a plurality of access openings in the rail system for lifting and lowering of a storage container between a position above the rail system and a position below the rail system, wherein said storage cell comprises:
a pair of parallel horizontal frame members;
a cradle for accommodating one or more storage containers thereon, the cradle being arranged on said horizontal frame members, so that, in use, the cradle can be moved between a storage position in which the one or more containers are stored in the cell and a transfer position in which the one or more containers are accessible from said storage cell to one of said robotic container-handling vehicles;
wherein the cell is configured such that, in use, the cradle is moved between said storage and transfer positions by one or more actuators provided on a lifting frame assembly associated with said container-handling vehicle.

**15.** The storage cell of claim 14, wherein the cradle is slidingly arranged on said pair of parallel horizontal frame members, for example or respective guides provided on said frame members.

**16.** The storage cell of claim 14 or 15, wherein the cradle comprises one or more vertically extending walls, which are optionally disposed generally perpendicularly with respect to a direction of movement of the cradle.

**17.** The storage cell of claim 14, 15 or 16, further comprising at least one pulley system connected to said cradle, wherein said pulley system comprises at least one belt, cable or chain member and at least two wheel elements disposed at a distance from each other along at least one of said horizontal frame members, and wherein said pulley system is configured to be operated by said one or more actuators;
optionally, wherein said pulley system further comprises at least one block or slider connected at one end to said at least one belt, cable or chain member and at another end to said cradle;
optionally, wherein corresponding pulley systems are arranged, respectively, on each parallel frame member, and wherein said arrangement is optionally specular.

**18.** The storage cell of claim 17, wherein at least one pulley system, optionally at least one wheel element thereof, comprises a shaft or spindle, which shaft is optionally rigidly mounted on, or integrally formed with, said at least one of the wheel elements.

**19.** The storage cell of claim 18, wherein said shaft or spindle extends generally vertically from the corresponding wheel element and horizontal frame member.

**20.** The storage cell of claim 19, wherein said shaft comprises at least one first roller disposed at a distal end thereof, said first roller being configured to be rotated by said one or more actuators, and said shaft being configured to be rotated by said roller.

**21.** The storage cell of claim 20, wherein at least one second idling roller is also disposed at said distal end of the shaft, parallel and in close proximity to said first roller, said first and second rollers being configured to receive therebetween one of said actuators, so that said rollers are arranged to rotate in the same direction in response to actuation.

**22.** An automated storage system comprising the lifting frame assembly or container lift device or robotic container-handling vehicle of any of claims 1 to 13, and/or the storage cell of any of claims 14 to 21.
